## Europäisches Patentamt
## European Patent Office
## Office européen des brevets

(19)

(11) Numéro de publication: **0 193 441 B1**

(12)

# FASCICULE DE BREVET EUROPÉEN

(45) Date de publication du fascicule du brevet:
02.11.88

(51) Int. Cl.⁴: **B 60 T 11/20**

(21) Numéro de dépôt: **86400251.4**

(22) Date de dépôt: **06.02.86**

(54) **Dispositif de commande pour maître cylindre double.**

(30) Priorité: **20.02.85 FR 8502463**

(43) Date de publication de la demande:
**03.09.86 Bulletin 86/36**

(45) Mention de la délivrance du brevet:
**02.11.88 Bulletin 88/44**

(84) Etats contractants désignés:
**DE GB IT**

(56) Documents cité:
**AT-B-305 791**
**BE-A-532 727**
**CH-A-206 502**
**DE-A-1 480 011**
**DE-A-1 655 266**
**DE-A-2 745 514**
**FR-A-1 146 933**
**GB-A-1 054 824**
**GB-A-1 429 000**
**US-A-3 444 691**

(73) Titulaire: **BENDIX France, 126, rue de Stalingrad, F-93700 Drancy (FR)**

(72) Inventeur: **Sansome, Serge, 29, rue du Pavé, F-91650 Breuillet (FR)**

(74) Mandataire: **Lejet, Christian, Division Technique Service Brevets BENDIX Europe 126, rue de Stalingrad, F-93700 Drancy (FR)**

LIBER, STOCKHOLM 1988

EP 0 193 441 B1

**Description**

L'invention se rapporte à un dispositif de commande pour maître cylindre double notamment pour véhicule automobile. L'invention concerne plus particulièrement un dispositif de commande pour maître cylindre double du type à deux maître cylindres placés parallèlement côte à côte, ledit dispositif étant susceptible d'être placé entre une pédale d'actionnement et des pistons desdits maître cylindres.

Dans ce type d'installation, le maître cylindre est fixé à une partie fixe du véhicule et la pédale est articulée par rapport également à une partie fixe du véhicule. Le dispositif de commande situé entre cette pédale et le maître cylindre, doit pouvoir assurer la transmission d'efforts sans guidage intermédiaire, et donc le dispositif de commande doit être rigide. Si un tel dispositif de commande est réalisé en une pièce unique monobloc comportant d'une part un accrochage à la pédale et d'autre part deux tiges de poussée parallèles susceptibles d'actionner les pistons des maître cylindres, un tel système présente l'inconvénient majeur d'interdir tout fonctionnement du maître cylindre si l'un des piston est bloqué dans son alésage. Pour éviter cet inconvénient un palonnier peut être incorporé au dispositif de commande avec néanmoins les inconvénients soit d'imposer un guidage aux tiges de poussée pour assurer leur parallélisme au même entraxe que l'entraxe des pistons mais de plus la tige de commande placée du côté de la pédale doit également être guidée, ces guidages multiples sont difficiles à réaliser compte tenu du nombre important de tolérances à prendre en considération à un endroit du véhicule qui se prête mal à ce type de guidage, plus précisément au niveau du tablier du compartiment moteur du véhicule. Il peut être envisagé pour résoudre le problème du guidage de faire un double palonnier qui assure un parallélisme permanent entre les tiges de poussée d'une part et la tige de commande d'autre part ce qui effectivement permet d'assurer et la rigidité de la commande et un fonctionnement correct en cas de blocage d'un des pistons. Néanmoins, cette solution présente l'inconvénient majeur que l'entraxe des deux tiges de poussée, qui restent parallèles, change lorsque le palonnier est mis en oeuvre, alors que l'entraxe des pistons lui est constant, ce qui interdit un fonctionnement correct de la commande en cas de défaillance d'un des circuits ou en cas de blocage d'un des pistons. Un tel dispositif, qui correspond au préambule de la présente revendication 1, est décrit dans le document GB-A-1 054 824.

L'invention a pour but de proposer un dispositif de commande fonctionnant dans tous les cas de figures, réalisé de manière économique et ne présentant pas les inconvénients énumérés ci-dessus.

Dans ce but l'invention est caractérisé en ce que les deux tiges de poussée sont reliées entre elles par des éléments de liaison axialement espacées et rigides, articulés sur lesdites tiges, chacun desdits éléments étant articulé en son milieu sur une tige de commande susceptible d'être sollicitée par ladite pédale et en ce que les tiges de poussée comportent une extrémité sphérique susceptible de coopérer avec une creusure à fond sphérique formée dans chacun desdits pistons et en ce qu un des éléments de liaison placé du côté du maître cylindre est articulé avec jeu sur les tiges de poussée formant ainsi ledit dispositif de maintien.

On comprend que grâce à une telle structure, le double palonnier assure toutes les fonctions souhaitées alors que le dispositif de maintien de l'écartement permet aux tiges de poussée et plus précisément à leurs extrémités qui coopèrent avec les pistons des maître-cylindres de conserver un ecartement identique à l'entraxe des pistons des maître-cylindres.

D'autres caractéristiques et avantages du dispositif de commande, objet de la présente invention, ressortiront de la description suivante de deux modes de réalisation, donnés à titre illustratif mais nullement limitatif, faites en relation avec les dessins annexés, dans lesquels:

- la Figure 1 est une vue en perspective du dispositif de commande objet de l'invention placé entre un maître cylindre double et une pédale de frein ;
- la Figure 2 est une vue en coupe partielle du dispositif de la Figure 1 ;
- la Figure 3 est une vue agrandie du dispositif de commande de la Figure 2 montrant ce dispositif au repos ;
- la Figure 4 est une vue similaire à la Figure 3 dans laquelle le palonnier est mis en oeuvre ;
- la Figure 5 est une vue similaire à la Figure 3 pour un deuxième mode de réalisation ;
- la Figure 6 est une vue similaire à la Figure 4 pour le deuxième mode de réalisation.

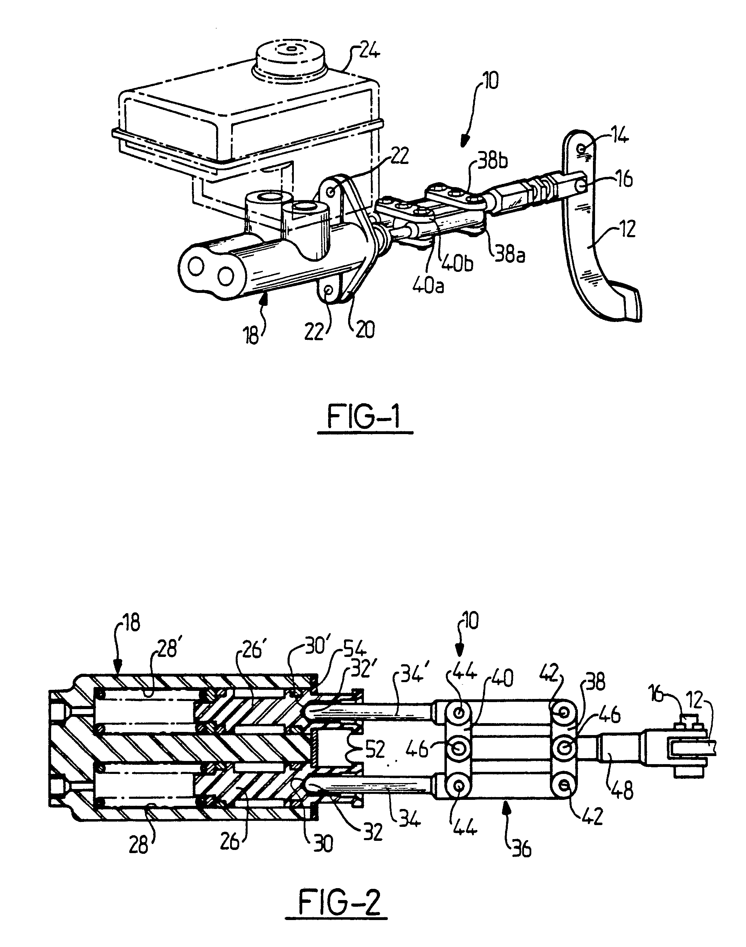

La Figure 1 représente en perspective un dispositif de commande pour maître cylindre double désigné dans son ensemble par la référence 10 placé entre une pédale de freinage 12 susceptible d'être montée articulée sur une partie fixe du véhicule (non représentée) au moyen d'un perçage 14 susceptible de recevoir un axe de maintien. La liaison entre le dispositif de commande 10 et la pédale 12 est assurée par un axe formant pivot 16 passant à travers des orifices correspondant formés dans te dispositif de commande 10 et la pédale 12. A son autre extrémité le dispositif de commande coopère avec un maître cylindre désigné dans son ensemble par la référence 18 susceptible d'être fixé sur une partie fixe du véhicule (non représentée) au moyen d'une bride de fixation 20 comportant des orifices de fixation 22. D'une façon conventionnelle le maître cylindre 18 est alimenté en liquide de frein au moyen d'un réservoir désigné dans son ensemble par la référence 24 et représenté symboliquement sur la Figure 1.

En se reportant aux Figures 1 et 2, on voit que le maître cylindre 18 est du type double à deux maître cylindres simples placés parallèlement côte à côte. Chacun de ces maître cylindres comprend un piston 26, 26' susceptible de coulisser dans un alésage 28, 28' formé dans le corps du maître cylindre. Chacun des pistons porte à son extrémité côté dispositif de commande une creusure 30, 30' à fond sphérique avec laquelle coopère une extrémité sphérique 32 32' de deux tiges de poussée 34 et 34'. Les deux tiges de poussée 34 et 34' sont reliées entre elles par un double palonnier 36 formé par deux éléments de liaison 38 et 40 axialement espacés et articulés sur chacune des tiges de poussée par des axes formant pivots respectivement 42 et 44. Ces éléments de liaison 38 et 40 sont d'autre part articulés par leur milieu au moyen d'axe formant pivot 46 sur une tige de commande 48 susceptible d'être reliée à la pédale 12 au moyen d'un axe formant pivot 16.

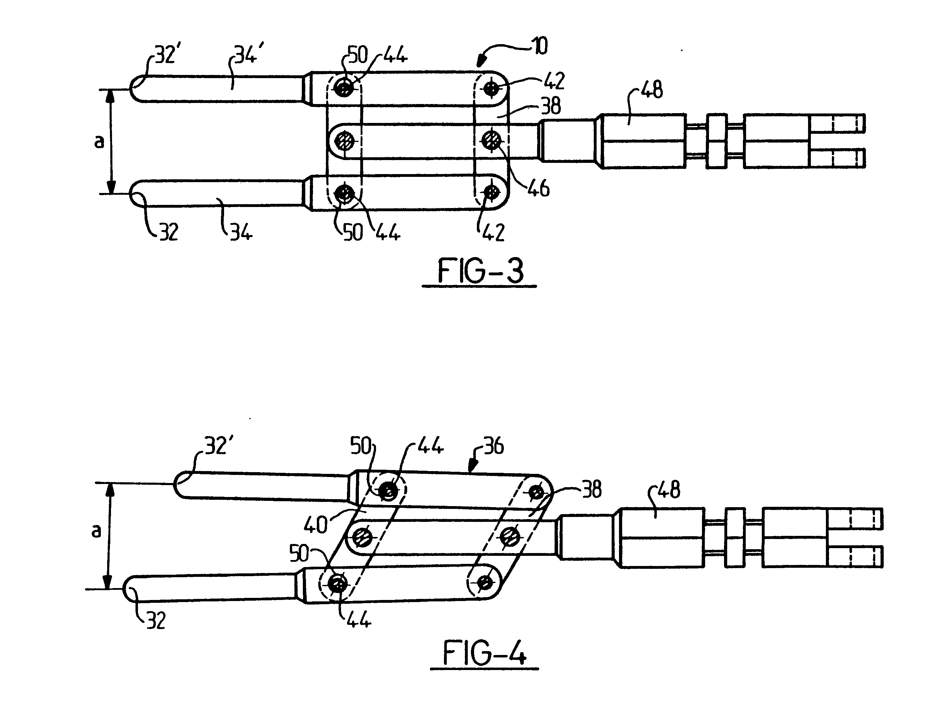

En se reportant aux Figures 3 et 4 sur lesquelles seul le dispositif de commande a été représenté, on voit grâce à une coupe partielle que si les axes formant pivots 42 et 46 sont montés sans jeu dans les alésages correspondants formés sur les tiges de poussée 34 et 34' l'élément de liaison 38 et la tige de commande 48, il n'en est pas de même des axes formant pivots 44 qui sont reçus dans des orifices 50 d'un diamètre plus grand que le diamètre des axes 44. On notera que lorsque les extrémités 32 et 32' sont espacées d'un écartement "a" qui correspond à l'entraxe des pistons 26 et 26' des maître cylindres 18 les axes 44 sont au contact des bords intérieurs des orifices 50, par par bords intérieurs on entend les bords qui sont situés le plus près de la tige de commande 48. En se reportant à la Figure 4, on voit que si un des pistons 26 ou 26' se déplace plus lentement que l'autre, en l'occurence c'est le piston 26' qui a pris du retard sur le piston 26 le palonnier double 36 est mis en oeuvre, c'est-à-dire que les éléments de liaison 38 et 40 prennent une inclinaison par rapport à la tige de commande 48 et les axes 44 se déplacent à l'intérieur des orifices 50 tout en gardant le contact avec leur bordure ce qui permet aux extrémités 32 et 32' de conserver l'écartement "a" défini par les creusures 30 et 30' formées dans les pistons 26 et 26'. Les orifices 50 en association avec les axes formant pivots 44 et la coopération des extrémités sphériques 32 et 32' avec les creusures à fond sphérique 30 et 30' forment un dispositif de maintien de l'écartement des points d'application des efforts sur les pistons.

On voit que grâce à cette structure, du fait que les axes 40 sont toujours au contact avec les bords des orifices 50 l'ensemble du dispositif de commande 10 reste rigide, c'est à dire reste globalement dans l'alignement de la tige de commande 48 sans avoir besoin de palier ou guidage intermédiaire.

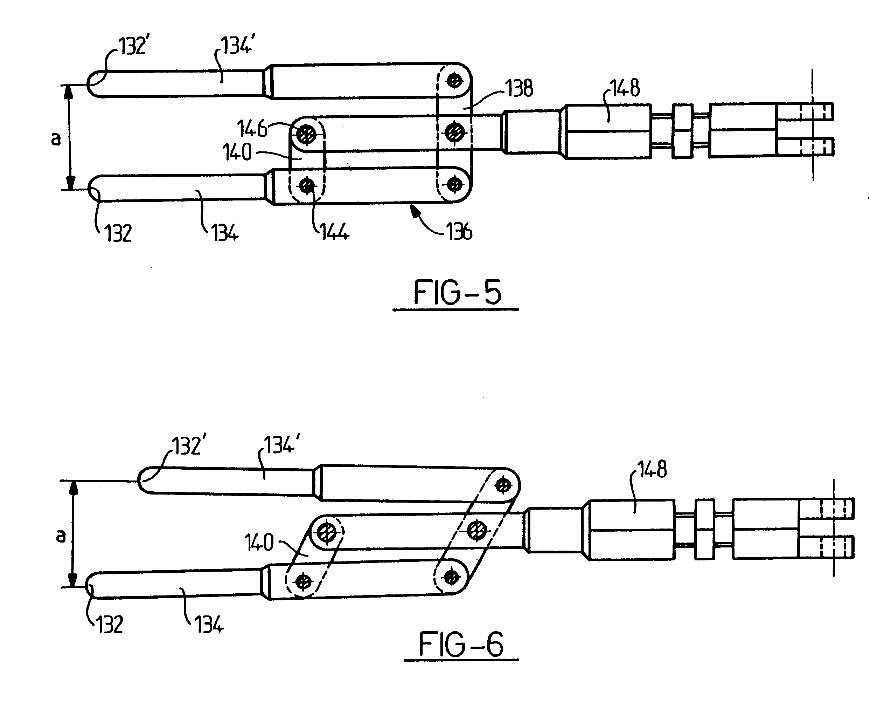

En se reportant aux Figures 5 et 6 qui représentent un deuxième mode de réalisation de l'invention, les mêmes pièces remplissant la même fonction portent le même numéro de référence augmenté de 100. Dans ce mode de réalisation, la différence essentielle par rapport au précédent réside dans l'élément de liaison 140 qui n'est articulé que sur la tige de commande 148 et sur une seule tige de poussée 134 au moyen de deux axes 146 et 144. On notera que dans ce mode de réalisation, l'axe formant pivot 144 est monté sans jeu sur l'élément de liaison 140. On a ainsi un double palonnier qui assure le parallélisme de la tige de commande 148 et de la tige de poussée 134, la tige de poussée 134' étant libre de prendre une inclinaison par rapport à la tige de poussée 148, comme on le voit plus particulièrement sur la Figure 6, de manière à conserver la distance "a" entre les extrémités 132 et 132' respectivement des tiges 134 et 134'.

On voit ainsi, que grâce à l'invention on a réalisé un dispositif de commande simple, d'un prix réduit, garantissant un bon fonctionnement du dispositif de commande sans nécessiter un guidage particulier entre la pédale de commande associée à une partie du véhicule et le maître cylindre associé à une autre partie du véhicule et par conséquent tous les problèmes de guidages intermédiaires ou d'alignements sont supprimés grâce à la structure de l'invention.

On notera également en se reportant à la Figure 1 que les éléments de liaison 38 et 40 sont formés de deux pièces 38a et 38b d'une part et 40a et 40b d'autre part identiques deux par deux et placés de part et d'autre de la tige de commande et des tiges de poussée, ceci évitant aux axes de travailler en porte-à-faux. On notera également que les extrémités des pistons 26 et 26' comportent des collerettes 52 susceptibles de venir en appui sur un pièce 54 solidaire du corps du maître cylindre 18 limitant ainsi la course des pistons 26 et 26'. En fonction de cette course maximale des pistons 26 et 26' on définit le jeu nécessaire entre les axes 44 et les orifices 50 correspondants, pour permettre dans toutes les conditions extrêmes de maintenir la distance a entre les extrémités 32 et 32'.

## Revendications

1. Dispositif de commande (10) pour maître-cylindre double (18) du type à deux maître-cylindres placés parallèlement côte à côte, ledit dispositif (10) étant susceptible d'être placé entre une pédale d'actionnement (12) et des pistons (26, 26') desdits maître-cylindres, ledit dispositif (10) comportant un double palonnier (36) assurant l'équilibrage des efforts appliqués sur chacun des pistons (26, 26') en assurant la rigidité du dispositif de commande (10) ledit double palonnier (36) comportant de plus un dispositif de maintien (40, 44, 50 - 140, 144) de l'écartement "a" des points d'application (32, 32' - 132, 132') des efforts sur lesdits pistons, (26, 26'), le double palonnier (36, 136) étant constitué par deux tiges de poussée (34, 34' -' 134, 134') susceptibles de solliciter lesdits pistons (26, 26'), caractérisé en ce que les deux tiges de poussée sont reliées entre elles par des éléments de liaison (38, 40 - 138, 140) axialement espacées et gides, articulés sur lesdites tiges (34, 34' - 134, 134'), chacun desdits éléments étant articulé en son milieu sur une tige de commande (48 - 148) susceptible d'être sollicitée par ladite pédale (12), et en ce que les tiges de poussée (34, 34') comportent une extrémité sphér que (32, 32') susceptible de coopérer avec une creusure (30, 30') à fond sphérique formée dans chacun desdits pistons (26, 26') et en ce que l'un (40) des éléments de liaison (38, 40) placé du côté du maître-cylindre est articulé avec jeu sur les tiges de poussée (34, 34') formant ainsi ledit dispositif de maintien (44, 50).

2. Dispositif selon la revendication 1, caractérisé en ce que l'un (140) des éléments de liaison (138, 140) placé du côté du maître-cylindre d'une part est articulé sans jeu sur la tige de commande (148) et d'autre part est articulé sans jeu sur une seule tige de poussée (134), lesdites tiges de poussée (134, 134') comportant une extrémité (132, 132') sphérique susceptible de coopérer avec une creusure (30, 30') à fond sphérique formée dans chacun desdits pistons (26, 26').

3. Dispositif selon l'une des revendications 1 ou 2 caractérisé en ce que chacun des éléments (38, 40 - 138, 140) est formé de deux pièces identiques (38a, 38b, 40a, 40b) placées de part et d'autre de la tige de commande (48 - 148) et les tiges de poussée (34, 34' - 134, 134').

## Patentansprüche

1. Betätigungsvorrichtung (10) für einen Tandem-Hauptzylinder (18) mit zwei Hauptzylindern, die parallel zueinander Seite an Seite angeordnet sind, wobei die Vorrichtung (10) zwischen ein Bedienungspedal (12) und Kolben (26, 26') der Hauptzylinder einsetzbar ist, die Vorrichtung (10) ein Ausgleichsgestänge (36) aufweist, das das Gleichgewicht der auf jeden der Kolben (26, 26') ausgeübten Kräfte sicherstellt, indem es die Steifigkeit der Betätigungsvorrichtung (10) sicherstellt, das Ausgleichsgestänge (36) ferner eine Haltevorrichtung (40, 44, 50 - 140, 144) zum Aufrechterhalten des Abstandes "a" zwischen den Punkten (32, 32' - 132, 132') aufweist, an denen die Kräfte an den Kolben (26, 26') angreifen, und das Ausgleichsgestänge (36, 136) von zwei Schubstangen (34, 34' - 134, 134') gebildet wird, die auf die Kolben (26, 26') einwirken, dadurch gekennzeichnet, daß die beiden Schubstangen untereinander durch axial beabstandete und starre Verbindungselemente (38, 40 - 138, 140) verbunden sind, die an den Schubstangen (34, 34' - 134, 134') angelenkt sind, wobei jedes der Verbindungselemente in seiner Mitte an einer Betätigungsstange (48 - 148) angelenkt ist, auf die das Pedal (12) einwirkt, und daß die Schubstangen (34, 34') ein sphärisches Ende (32, 32') aufweisen, die mit einem Hohlraum (30, 30') mit sphärischem Boden zusammenwirken, der in jedem der Kolben (26, 26') gebildet ist, und daß das eine (40) der Verbindungselemente (38, 40), das auf der Seite des Hauptzylinders angeordnet ist, mit Spiel an den Schubstangen (34, 34') angelenkt ist, um so die Haltevorrichtung (44, 50) zu bilden.

2. Betätigungsvorrichtung nach Anspruch 1, dadurch gekennzeichnet, daß das eine (140) der Verbindungselemente (138, 140), das auf der Seite des Hauptzylinders angeordnet ist, einerseits spielfrei an der Betätigungsstange (148) und andererseits spielfrei an einer einzigen Schubstange (134) angelenkt ist, wobei die Schubstangen (134, 134') ein sphärisches Ende (132, 132') aufweisen, die mit einem Hohlraum (30, 30') mit sphärischem Boden zusammenwirken, der in jedem der Kolben (26, 26') gebildet ist.

3. Betätigungsvorrichtung nach Anspruch 1 oder 2, dadurch gekennzeichnet, daß jedes der Verbindungselemente (38, 40 - 138, 140) aus zwei gleichen Teilen (38a, 38b, 40a, 40b) besteht, die beidseitig zur Betätigungsstange (48 - 140) und den Schubstangen (34, 34' - 134, 134') angeordnet sind.

## Claims

1. Control device (10) for a twin master cylinder (18) of the type with two master cylinders situated side by side and parallel to each other, the said device (10) being capable of being positioned between an actuating pedal (12) and pistons (26, 26') of the said master cylinders, the said device (10) comprising a twin beam (36) ensuring balancing of the forces applied to each of the pistons (26, 26') while ensuring the rigidity of the control device (10) the said twin beam (36) comprising in addition a device for maintaining (40, 44, 50 - 140, 144) the separation "a" of the points of application (32, 32' - 132, 132') of the forces on the said pistons (26, 26'), the twin beam (36, 136) consisting of two push rods (34, 34' - 134, 134') which are capable of stressing the said pistons (26, 26'), characterised in that the two push rods are joined together by connecting components (38, 40 - 138, 140) which are rigid, are axially spaced apart and are hinged to the said rods (34, 34' - 134, 134'), each of the said components being hinged at its middle to a control rod (48 - 148) which is capable of being stressed by the said pedal (12), and in that the push rods (34, 34') comprise a spherical end (32, 32') which is capable of cooperating with a cavity (30, 30') with a spherical bottom which is formed in each of the said pistons (26, 26') and in that one (40) of the connecting components (38, 40) positioned on the same side as the master

**0 193 441**

cylinder is hinged to the push rods (34, 34') with a clearance thus forming the said maintaining device (44, 50).

2. Device according to claim 1, characterised in that one (140) of the connecting components (138, 140) situated on the same side as the master cylinder, firstly, is hinged without clearance to the control rod (148) and secondly, is hinged without clearance to a single push rod (134), the said push rods (134, 134') comprising a spherical end (132, 132') which is capable of cooperating with a cavity (30, 30') with a spherical bottom formed in each of the said pistons (26, 26').

3. Device according to either of claims 1 or 2, characterized in that each of the components (38,40 - 138, 140) is formed by two identical components (38a, 38b, 40a, 40b) situated on each side of the control rod (48 - 148) and the push rods (34, 34' - 134, 134').

FIG-1

FIG-2

FIG-3

FIG-4

FIG-5

FIG-6

0 193 441